(19) **Europäisches Patentamt**

**European Patent Office**

**Office européen des brevets**

(11) **EP 1 016 482 A1**

(12) **EUROPEAN PATENT APPLICATION**
published in accordance with Art. 158(3) EPC

(43) Date of publication:
05.07.2000 Bulletin 2000/27

(51) Int. Cl.⁷: **B23D 25/06**, B23D 25/12,
B23D 35/00

(21) Application number: 97905436.8

(22) Date of filing: 03.03.1997

(86) International application number:
PCT/JP97/00640

(87) International publication number:
WO 98/39125 (11.09.1998 Gazette 1998/36)

(84) Designated Contracting States:
DE

(71) Applicant: **Hitachi, Ltd.**
**Chiyoda-ku, Tokyo 101 (JP)**

(72) Inventors:
• **KIMURA, Tomoaki**
**Hitachi-shi Ibaraki 317 (JP)**

• **TAKAKURA, Yoshio**
**Hitachi-shi Ibaraki 317 (JP)**

(74) Representative:
**Beetz & Partner**
**Patentanwälte**
**Steinsdorfstrasse 10**
**80538 München (DE)**

(54) **FLYING SHEAR AND FLYING SHEAR METHOD**

(57)     A flying shear is provided with upper and lower shearing blades shearing a running long material from up and down sides, a pair of, upper and lower, drum shafts mounting the upper and lower shearing blades at positions of the same phase, respectively, and upper and lower swing frames supporting the upper and lower drum shafts, wherein fulcrum gears are provided on one side of said upper and lower swing frames in the running direction of the long material, and a shearing blade opening and closing means is provided on the other side of the upper and lower swing frames in the running direction of the long material for swinging the upper and lower swing frames around the fulcrum gears as fulcrums in the up and down direction to open and close said shearing blades, whereby the rigidity of equipment for effecting opening and closing operation of the shearing blades is increased, play in the equipment is made small, the time required for opening and closing the shearing blades is short, and shearing precision can be improved.

FIG.1

EP 1 016 482 A1

## Description

TECHNICAL FIELD

The present invention relates to a flying shear for and a flying shear method of effectively shearing widthwise a long material running at a high speed.

TECHNICAL BACKGROUND

Recently, progress in a hot thin material manufacturing method has realized a system of joining, one by one, rough bars rolled to be reduced in thickness by a rough rolling mill on an entry side of a finishing tandem rolling mill to produce endlessly a thin plate product.

In this production system, it is necessary to shear, at a high speed, a thin plate produced at a high speed by the finishing rolling mill every prescribed length. A typical example of a size of a thin material to be sheared is 1.0 to 4.5 mm in thickness and 600 to 1,650 mm in width. A running speed of the thin plate is very high, for example, 600 to 1,200 m/min. Further, a temperature of hot thin plate material is 500 to 600°C.

Shears for shearing such a thin plate running at a high speed are disclosed in JP A 4-223818, JP A 5-123919, JP A 5-131320, etc.

In an example disclosed in JP A 4-223818, a system is taken in which upper and lower drum shafts having shear blades rotated in opposite directions to each other are opened when not shearing, and they are closed by using a hydraulic cylinder actuated by a servo changeover valve only when shearing.

However, in such a system, since excessively large shearing force which is necessary at the time of shearing is applied within a very short time by the hydraulic cylinder of low rigidity, there were such defects that vibrations take place, a sheared shape is worsened and shearing miss occurs sometimes.

In JP A 5-123919, in order to remove the above mentioned defects, an opening and closing mechanism between upper and lower drum shafts is formed by providing a pair of eccentric rings each of which is eccentric to the axis of the drum shaft by a proper amount and mounted on the periphery of the bearing supporting the drum shaft, and providing gears rotating the eccentric rings, and the gears are driven to rotate by actuators separately provided to effect opening and closing between the upper and lower drum shafts, thereby to effect shearing.

In this system, the rigidity of the drum shafts of the opening and closing mechanism is surely increased, a problem of generating vibrations due to the opening and closing in a short time could be solved. However, since shearing blades are opened and closed by raising and lowering the bearings, the diameters of the roll bearings supporting the eccentric rings are very large and the number of the bearings is increased twice, accumulated errors of play of the bearings become very large, which changes largely an amount of lap of the upper and lower shearing blades when shearing or a gap between the shearing blades, so that there are left the problems that a sheared shape is worsened and shearing miss is induced.

Further, in JP A 5-131320, upper and lower drum shafts are accommodated inside a stand, the upper and lower drum shafts are mounted on upper and lower swing frames swinging around fulcrums mounted on a stand column on one side, and eccentric mechanisms each are provided a back face of each of the swing frames, whereby opening and closing of the upper and lower swing frames and between the drum shafts are effected.

However, in this example, a lot of pin mechanisms are provided, accordingly, accumulated play becomes large, whereby the same problems as mentioned above occurred. Further, in order to operate the upper and lower eccentric mechanisms, it is necessary to drive each eccentric shaft and it was very difficult to operate them in synchronism with each other.

Further, since a rotation mechanism of the drum shafts and the mechanism of opening and closing the drum shafts are connected to each other through gears at speed ratio of 1/ integers, it is necessary that driving of the drum shafts is stopped when not shearing and it is necessary to effect shearing by rapidly accelerate the rotation of the drum shafts when necessary to shear, so that there was the problem that an allowable shearing speed can not be made large.

Since conventional shears had large play in design and low rigidity, it was difficult to stably shear a thin plate material running at a high speed, it was necessary to provide a complicated control mechanism, and the equipment therefor had a tendency to become large in scale.

Further, it was insufficient to take into consideration passage of a thin plate material when not shearing. That is, it was difficult to easily make large, to a pass line of thin plate material, particularly, a distance between an upper drum shaft and a passing line of a thin plate material when not shearing, and to easily effect non-interference thin plate passage between the upper shearing blade mounted on the upper drum shaft and the thin plate material.

Further, it was not considered about maintenance, that is, since exchange of each of the shearing blades provided on the upper and lower drum shafts is effected inside the shear, the exchange operation was difficult.

An object of the present invention is to provide a flying shear and flying shear method in which the rigidity of equipment for effecting an opening and closing operation of shearing blades is increased, play in the equipment is made small, an opening and closing time of the shearing blades is short and the shearing precision is increased.

DISCLOSURE OF THE INVENTION

The object of the present invention is achieved by a flying shear comprising upper and lower shearing blades shearing a running long material from an up and down direction, a pair of, upper and lower, drum shafts mounting the respective upper and lower shearing blades at positions of the same phase, and upper and lower swing frames supporting the upper and lower drum shafts, wherein fulcrum gears are provided on one sides of the upper and lower swing frames in the running direction of the long material, and a shearing blade opening and closing means is provided on the other sides of the swing frames in the running direction of the long material for swinging the upper and lower swing frames around the fulcrum gears in the up and down direction to open and close the shearing blades.

Alternately, the object of the present invention is achieved by a flying shear in which a pair of, upper and lower drum shafts having shearing blades mounted at position of the same phase for shearing a running long material to prescribed length are driven to rotate in opposite direction to each other through a pinion stand and spindles, synchronizing gears for synchronizing each speed are provided on the pair of upper and lower drum shafts provided with the shearing blades, the upper and lower drum shafts, upper and lower shearing blades and synchronizing gears are opened when shearing is not effected, and closed to shear the long material by the upper and lower shearing blades when shearing is effected, wherein the upper and lower drum shafts are mounted on swing frames through bearing boxes, respectively, fulcrum gears are mounted at fulcrums of rotation of the swing frames, respectively to engage with each other, the upper and lower swing frames are connected to each other through eccentric mechanism on the other end of the swing frames and a distance between connecting points of the upper and lower swing frames is made able to change expansible by the eccentric mechanism, whereby the upper and lower swing frames are opened and closed, and not-shearing and shearing operations of the running long material are effected.

Alternately, the object of the present invention is achieved by mounting upper and lower drum shafts for shearing on upper and lower swing frames through detachable bearing boxes, respectively, exchange of the shearing blades mounted on the respective drum shafts is effected by closing the upper and lower swing frames to a prescribed position, overlaying the bearing boxes inserting and supporting the drum shafts in the up and down direction, releasing the bearing boxes from the swing frames, and taking out from the inside of the swing frames to the outside by running on rail by an actuator.

Alternately, the object of the present invention is achieved by a flying shear method of moving up and down a pair of, upper and lower, swing frames supporting upper and lower drum shafts while rotating said upper and lower drum shafts mounting upper and lower shearing blades at the same phase position and shearing a running long material in a up and down direction, wherein the upper and lower shearing blades are opened and closed by moving one sides of the upper and lower swing frames in the up and down direction, with fulcrum gears provided as fulcrums on the other sides of the upper and lower swing frames in the running direction of the long material.

BRIEF DESCRIPTION OF THE DRAWINGS

Fig. 1 is a horizontal sectional view of a flying shear of an embodiment of the present invention;
Fig. 2 is a front view of the flying shear of an embodiment of the present invention;
Fig. 3 is a sectional view of the flying shear in Fig. 1 taken along an A-A section;
Fig. 4 is a hot thin plate manufacturing apparatus in which the flying shear of an embodiment of the present invention is arranged;
Fig. 5 is an example of joining a thin plate joining portion of the hot thin plate manufacturing apparatus in which the flying shear of an embodiment of the present invention is arranged;
Fig. 6 is a view showing an up and down motion of upper and lower shearing blades of the flying shear of an embodiment of the present invention;
Fig. 7 is a horizontal sectional view of a flying shear of an embodiment of the present invention;
Fig. 8 is a sectional view of the flying shear in Fig. 7 taken along a B-B section; and
Fig. 9 is a sectional view of the flying shear in Fig. 7 taken along a C-C section.

BEST MODE FOR PRACTICING THE PRESENT INVENTION

Upper and lower drum shafts arranged on upper and lower sides of a running thin plate, respectively, and provided with shearing blades at positions of the same phase are mounted on swing frames through detachable bearing boxes, respectively, swing fulcrums are provided on one end side of the sing frames, respectively, and fulcrum gears are provided on fulcrum shafts, respectively. The number of fulcrum gear teeth is larger in the lower side gear than the upper side gear. That is, a pitch diameter of the fulcrum gear on the upper side which is a fulcrum of swing of the upper swing frame is desirable to be larger than a pitch diameter of the lower side fulcrum gear which becomes a fulcrum of swing of the lower side fulcrum gear.

The other end portions of the upper and lower swing frames are connected to each other through an eccentric mechanism. An eccentric shaft of the eccentric mechanism is driven by an actuator. The upper and lower drum shafts each are connected to a pinion stand through a spindle, and the pinion stand is driven by a motor. The drum shafts provided on the upper and lower swing frames can be overlaid through the detachable bearing boxes when the swing frames are closed to a prescribed position. Rails mounting thereon the bearing boxes supporting the lower drum shaft and an actuator pulling out the bearing boxes of the lower drum shaft to the outside are provided.

The upper and lower drum shafts with shearing blades, provided on the upper and lower swing frames are opened to an open side, when shearing is not effected, by operation of the eccentric mechanism which is arranged at the connecting point of the upper and lower swing frames, provided on the other end side of the swing frames.

Under this condition, the upper swing frame less in number of teeth is opened more than the lower frame by meshing of the gears provided on the swing fulcrum shafts of the upper and lower swing frames, which prevents the thin plate from contacting with the shearing blades of the upper and lower drum shafts.

The upper and lower drum shafts are being driven to rotate by the motor through the pinion even when shearing is not effected.

When shearing, the eccentric mechanism provided at the connecting point of the other end portions of the upper and lower swing frames are operated to close the upper and lower drum shafts to a close direction, thereby to shear the thin plate to a prescribed length by the shearing blades of the upper and lower drum shafts. In this case, synchronizing gears provided on the upper and lower drum shafts also are meshed with each other to secure synchronizing adjustment of the blades positions of the upper and lower drum shafts.

Although the bearing boxes for supporting the drum shafts on the upper and lower swing frames are fixed by wedge mechanisms without play, this fixing is released, the upper and lower swing frames are closed to a close condition, the bearing boxes of the upper and lower drum shafts are overlaid and a set of the bearing boxes of the lower drum shaft on the rails are pulled out to the outside by an actuator, so that exchange of the shearing blades, which exchange is excellent for maintenance, is possible.

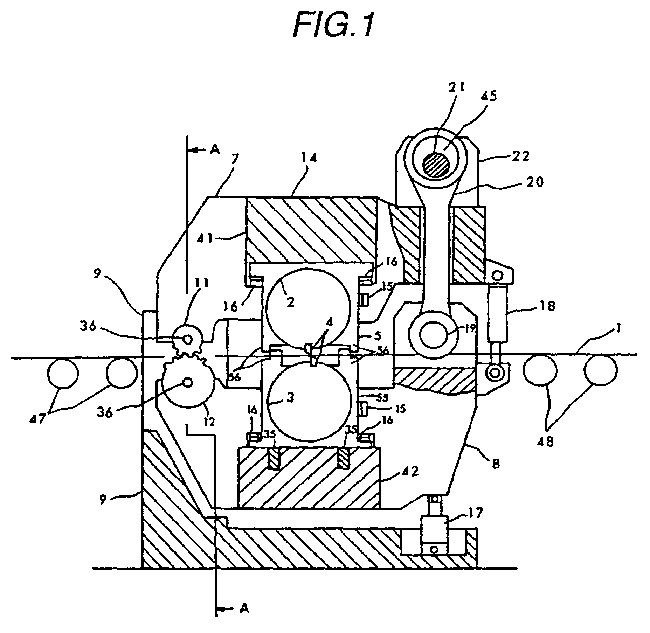

An embodiment of the present invention will be explained, referring to Figs. 1 to 3.

Fig. 1 shows a horizontal sectional view of a flying shear of an embodiment of the present invention.

A thin plate material 1 is transferred to the flying shear by entry side table rollers 47 arranged on the entry side of the flying shear. The thin plate 1 is led to the exit side and transferred by exit table rollers 48 on the exit side of the flying shear.

Shearing blades 4 shearing the thin plate 1 are mounted on an upper drum shaft 2 and a lower drum shaft 3, respectively, the upper drum shaft 2 and lower drum shaft 3 are supported by bearing boxes 5 and bearing boxes 55, respectively. The bearing boxes 5 and bearing boxes 55 are fixedly supported on reft and right connecting beams 14 and 42 of an upper swing frame 7 and lower swing frame 8, respectively.

Upon this fixing, the bearing boxes 5, 55 are fixed to the left and right connecting beams 14, 42 through cotters 16 to restrict vertical play. Further, in order to restrict horizontal play, the bearing boxes 5 and 55 are fixed to the left and right connecting beams 14, 42 through cotters 15.

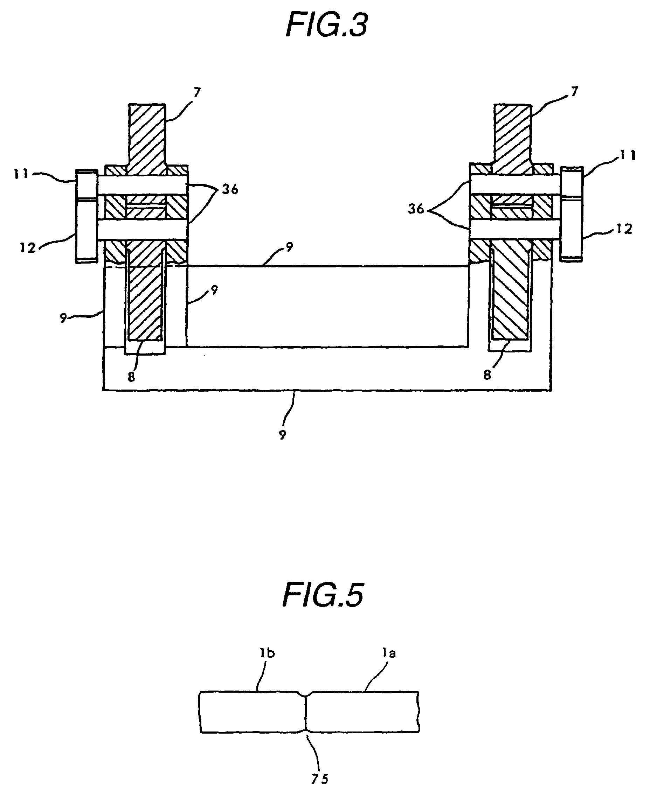

On one side (the left side or the entry side in Fig. 1) of the upper and lower swing frames 7, 8, the upper and lower swing frames 7, 8 each are mounted on a base 9 by fulcrum pins 36. As for this mounting, as shown in Fig. 3 showing an A-A section of Fig. 1, each swing frame is supported at two, left and right, positions. An upper fulcrum gear 11 and lower fulcrum gear 12 are mounted on the upper and lower fulcrum pins 36, respectively, and the fulcrum gears 11, 12 are meshed with each other.

Here, a pitch diameter of the upper fulcrum gear 11 is desirable to be smaller than that of the lower fulcrum gear 12.

That is, by making the pitch diameter of the upper fulcrum gear 11 smaller than that of the lower fulcrum gear 12, during release when shearing is not effected, that is, under the condition that the shearing blades are opened, an opening degree of the upper swing frame 7 differs from an opening degree of the lower swing frame 8, and the upper swing frame 7 is opened more widely than the lower swing frame 8, whereby it is possible to avoid contact of the thin plate 1 with the shearing blade 4. That is, the opening degree of the upper swing frame to a pass line along which the thin plate passes can be made wider and the opening degree of the lower swing frame to the pass line can be made narrower.

Further, since the thin plate 1 is transferred on the pass line by the table rollers 47, 48, under the condition that the shearing blades are opened, it is sufficient to lower the shearing blade 4 of the lower drum shaft 3 below the pass line. Therefore, on the lower side, it is unnecessary to provide a large stroke for retirement. On the contrary, the shearing blade 4 of the upper drum shaft 2 is necessary to be raised up from the pass line a little larger in stroke than the lower shearing blade.

On the other side (right side or exit side) of the upper and lower swing frames 7 and 8, an eccentric mechanism is mounted, and the upper swing frame 7 and the lower swing frame 8 are connected to each other by a rod 20, in which the lower swing frame 8 is connected to the rod 20 by a pin 19. An eccentric shaft 21 is supported by a bearing portion 22 of the upper swing frame 7, and an eccentric cam 45 is joined to the rod 20.

Further, in order to restrict play of the rod 20, pin 19 and eccentric cam 45, a balance cylinder 18 is provided for the upper and lower swing frames 7, 8. The balance cylinder 18 is desirable to be mounted by pins or the like to be rotatable.

Further, the lower swing frame 8 is supported on the base 9 through a cylinder 17 on one side (right side in Fig. 1) to support the weight of the shear body portion. The balance cylinder 17 is desirable to be rotatably mounted by pins or the like.

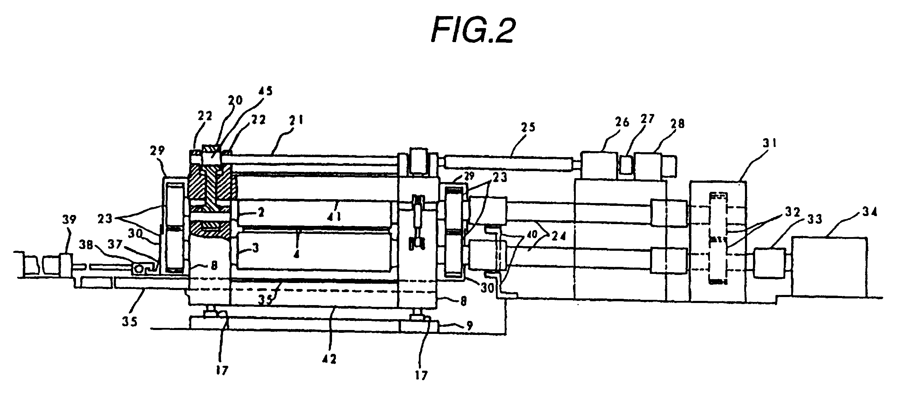

Next, in Fig. 2, a front view of the flying shear which is one embodiment of the present invention is shown.

As shown in Fig. 2, the eccentric shaft 21 can be driven by driving a motor 28 to rotate through a coupling 27, a reduction gear 26 and a spindle 25.

The eccentric cam 45 rotates inside the joined circle of an upper portion of the rod 20, whereby a distance between the upper swing frame 7 and the lower swing frame 8 can be adjusted, that is, the upper and lower shearing blades 4 can be opened and closed. The opening and closing motion is an opening motion when the thin plate 1 is not sheared and a closing motion when the thin plate 1 is sheared.

As shown in Fig. 2, rotation driven by a motor 34 drives pinions 32 of the pinion stand 31 to rotate and drives the upper drum shaft 2 and the lower drum shaft 3 through spindles 24. In the vicinity of the bearing boxes 5, 55, on the outside of the shear, supporting the upper and lower drum shafts 2, 3, synchronizing gears 23 are provided. The synchronizing gears 23 are provided on the upper and lower drum shafts 2, 3, respectively. When the upper swing frame 7 and the lower swing frame 8 are closed, the synchronizing gears 23 meshed with each other make it possible to prevent the shearing blades 4 from being deviated from each other. Further, the synchronizing gears 4 are desirable to be lubricated. In the case of lubrication, it is desirable to prevent dispersion of lubrication oil by providing a case 20 and a case 30.

The shearing blades 4 mounted on the upper and lower drum shafts 2, 3 are necessary to be exchanged with for improving shearing every prescribed number of shearing frequencies. Upon this exchange, the upper swing frame 7 and the lower swing frame 8 are closed to a prescribed position (it is a matter of course that there is no thin plate 1 there when the blades are exchanged), and the upper bearing boxes and lower bearing boxes 55 are overlaid at concave and convex portions 56 as shown in Fig. 1. And then, fastening of the cotters 16 and cotters 15 are released, the lower bearing box 55 and connecting mechanism 37, 38 are connected. The upper bearing boxes 5 and lower bearing boxes 55 are moved on rails 35 shown in Fig. 2 by a cylinder 39, pulled out of the shear and the blades are exchanged. In this case, the spindles 24 are left at the position of Fig. 2, so that the spindles 24 are held by a spindle support mechanism 40.

In this manner, the exchanging operation of the shearing blades 4 is effected outside the shear, so that the operation can be easily carried out.

Fig. 3 shows the A-A section of Fig. 1 in which a mounting condition of the upper and lower swing frames on one side thereof (left side or entry side in Figure) is shown.

As shown in Fig. 3, the upper and lower swing frames 7 and 8 are mounted on the base 9 by the fulcrum pins 36, respectively, and supported at two, left and right (in the width direction of the thin plate 1) positions. The fulcrum pins 36 become fulcrums of the shearing blades 4, respectively. The fulcrum gear 11 and fulcrum gear 12 are provided on the upper and lower fulcrum pins 36 at two positions in the width direction, respectively, and the upper and lower fulcrum gears 11 and 12 are meshed with each other.

Next, a shear of another embodiment of the present invention is described.

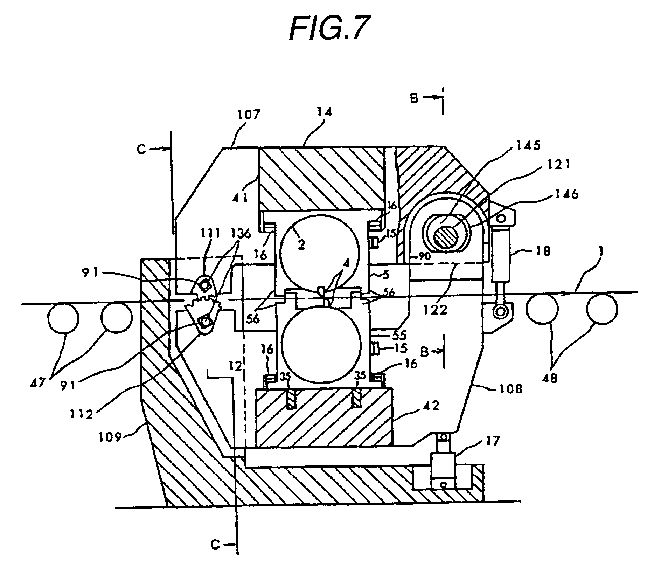

Fig. 7 shows the shear of another embodiment of the present invention. In the equipment of Fig. 7, an example is shown in which the other end sides of upper and lower swing frames 107, 108 are directly connected to each other by an eccentric mechanism.

That is, it is an object to make the number of parts as few as possible and to restrict play.

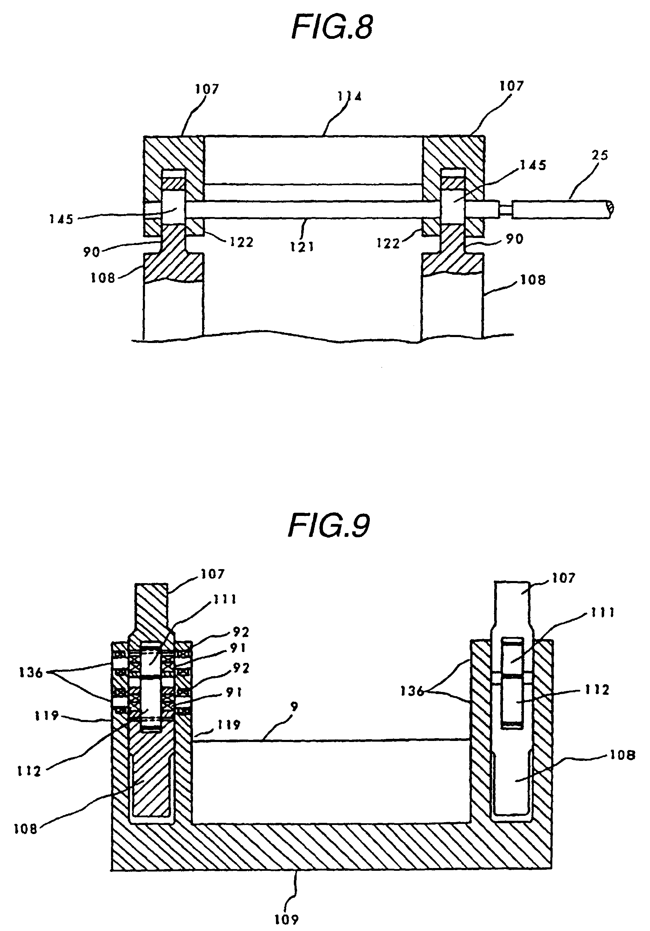

Fig. 8 shows a B-B section of the flying shear of Fig. 7.

In this flying shear, an eccentric shaft 121 is supported by a bearing portion 122 of an end of the upper swing frame 107, an eccentric cam 145 is provided in an ellipse provided in a fulcrum connection arm 90 of the lower swing frame 108. Rotation within the ellipse 146 is converted into a vertical rising and lowering motion (swing operation of the upper and lower swing frames, opening and closing operation of shearing blades) by the eccentric cam 145.

The eccentric shaft 121 is driven by the motor 28 through the spindles 25 in the same manner as in Fig. 2. By this driving, a gap between the upper and lower swing frames 107, 108 is closed to be narrow and the thin plate 1 is sheared by the shearing blades mounted on the upper and lower drum shafts 2, 3. Such shearing is the same as in the case of the flying shear of Fig. 1.

Further, as for a rotation fulcrum mechanism of the upper and lower swing frames 107, 108, also, another embodiment is provided in Fig. 7. That is, as in Fig. 9 showing a C=C section of Fig. 7, it is an example in which gears of the rotation supporting portion are provided on the fulcrum portions of the upper and lower swing frames 107, 108.

That is, the fulcrum portion gears 111, 112 are inserted in the fulcrum portions of the upper swing frame 107 and the lower swing frame 108, respectively, and the upper and lower fulcrum portion gears 111, 112 are fixed to the upper and lower swing frames 107, 108 by fitting with square-sectional shafts 91.

Gear shafts 136 are both-shaft-supported on a base frame 109 by using roll bearings. By such both-shaft-support, it is possible to raise the rigidity of the gear shafts.

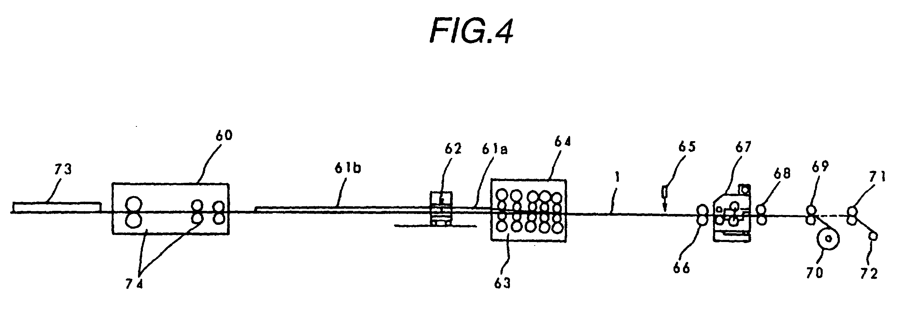

Next, high speed shearing practice conditions and a shearing method of a thin plate by the flying shear of the present invention will be explained, referring to Figs. 4 to 6.

Fig. 4 shows a hot rolling mill equipment for producing hot thin plates endlessly (continuously) at a high speed.

In Fig. 4, a high temperature slab 73 of about 250 mm in thickness is rolled and reduced in thickness by a rough rolling equipment 60 having several rough rolling mills 74 arranged therein, whereby about 40 mm thick rough bar 61 is produced. A trailing end of preceding rough bar 61a and a leading end of the following rough bar 61b are joined while running by a splicer 62.

The rough bar 61 joined in this manner is rolled and reduced in thickness by a finishing rolling equipment in which a lot of finishing rolling mills 63 are arranged, whereby a hot thin plate 1 of about 1 - 4.5 mm thickness is continuously produced. Then, the thin plate 1 is detected by a position detector of thin plate 1 or the like provided on the entry side of the shear 67, positions to be sheared are estimated and the thin plate 1 is sheared. Pinch rollers 66, 68 are provided on the entry side and exit side of the shear 67.

Each thin plate 1 sheared by the shear is wound up by a coiler 70 while being imparted tension by pressing force of the pinch rollers 69. Further, a next thin plate 1 is coiled by a coiler 72 through pinch rollers 71 in the same manner. The thin plate 1 continuously produced can be continuously coiled by changing the coiler 70 and coiler 72 in turn.

A producing speed of thin plate 1 is a high rolling speed of 1400 m/min to restrict release of cold of the rough bar 61.

However, when shearing it at a prescribed length, it is necessary to reduce the speed to about 1200 m/min because of limit in speed of winding effected then, etc., and the reduction of speed is desirable to be as small as possible.

Shearing of thin plate 1 by the shear 67 of the present invention is practiced as follows:

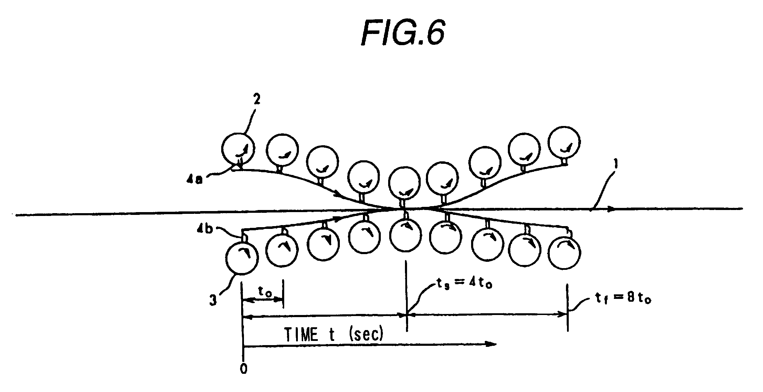

A position of a shearing portion of the thin plate 1 is acknowledged by estimating the position from the time passed after joining by the splicer 62, or by detecting a notch 75 formed previously as shown in Fig. 5 at a prescribed position on the entry side of the shear by an image processing type detector.

Further, in Fig. 4, pinch rollers 66, 68 are provided on the entry and exit sides of the shear 67 of the present invention. They are provided for making change in tension in the rolling portion and winding portion small when shearing.

Anyway, when a shearing portion of the thin plate 1 approaches to the shear 67, the eccentric shaft 21 in Fig. 1 is driven to rotate and accelerated by the driving motor 28 in Fig. 2 at a prescribed time before shearing, while the drum shafts 2, 3 having the shearing blades 4 are being always rotated.

Fig. 6 shows raising and lowering motions of the drum shafts 2, 3 with the shearing blades 4a, 4b. That is, it shows positions of the drum shafts 2, 3 with the shearing blades 4 to time passage.

Fig. 6 shows raising and lowering conditions of the upper and lower drum shafts 2, 3 to time passage after a time (t = 0) when the upper and lower drum shafts 2, 3 are driven to start by the eccentric shaft 21.

In this figure, the thin plate is sheared at a time ts, and the condition that the drum shafts 2, 3 are returned back to the original positions separated from each other is shown at a time tf. Time t0 is a time period required for rotating one turn, that is, the shearing blades 4a, 4b are rotated along the peripheries of the drum shafts by rotation of the drum shafts 2, 3.

The condition at time ts is that the shearing blades are closed, and at time of t = 0 and t = tf, the shearing blades are opened.

In this case, the positions of the shearing blades 4a, 4b of the drum shafts 2, 4 are synchronistically controlled before the thin plate reaches to a shearing portion so as to be positions corresponding to the shearing portion.

Assuming that a distance of the shearing blade 4 from the rotation center of each drum shaft 2, 3 is R, t0 can be expressed as $t0 = 2 \pi R / v0$. For example, in the case of R = 0.4 m and V0 = 20 m/s, t0 = 0.125 sec. While the drum shaft 2, 3 rotates four turns, when the eccentric shaft 21 of Fig. 1 is driven and accelerated and rotates 180° from the maximum separate distance, that is, after $ts = 4 \times t0 = 0.5 sec$, the thin plate 1 is sheared.

Without stopping the rotation of the eccentric shaft 21 as it is, further the rotation is continued by 180° and then stopped. This time is also controlled to be 4 x t0. Thereby, the upper and lower drum shafts 2, 3 can be positioned to wait for at the same separate positions (position of t = tf) as at the starting time (t = 0).

As mentioned above, in the present invention, the drum shafts 2, 3 of large moment of inertia are being always rotated, and the eccentric shaft 21 of smaller moment of inertia is accelerated and decelerated to open and close the shearing blades to shear the thin plate when shearing.

Further, in the present invention it is desirable to make a difference between a rising amount and a lowering amount of the upper and lower drum shafts 2, 3.

That is, in Fig. 6, a distance between the shearing blade 4a of the upper drum 2 and the thin plate 1 is set 80 mm at t =0, and a distance between the shearing blade 4b of the lower drum shaft 3 and the thin plate 1 is set about 40 mm. This is because it is desirable that the distance between the shearing blade 4a of the upper drum shaft 2 and the thin plate 1 is about 60 mm or larger at t = 0 (an open condition), and the distance between the shearing blade 4b of the lower drum shaft 3 and the thin plate 1 is about 30 mm or larger. Further, the distance between the shearing blade 4a of the upper drum shaft 2 and the thin plate 1 is desirable to be about 1.5 to 2.5 times as long as the distance between the shearing blade 4b of the lower drum shaft 3 and the thin plate 1.

Rising and lowering motion of the drum shafts 2, 3 is carried out by the eccentric shaft 21 to be along about a cosine curve to passage of time. When shearing is performed at $ts = 4 \times t0$, the distance between the upper shearing blade 4a and the thin plate 1 immediately before shearing is about 11.7 mm, and a sufficient distance is held, whereby scratching due to contact between the upper shearing blade 4a and the thin plate 1 can be prevented. The distance between the upper shearing blade 4a and the thin plate 1 immediately before shearing, that is, $t = 3 \times t0$ is desirable to be about 10 mm or larger.

Further, the distance between the lower shearing blade 4b and the thin plate 1 is about 5 mm and small, and the thin plate 1 is supported on the entry and exit sides of the shear by the table rollers 47, 48, as previously described of the equipment of Fig. 1. Accordingly, the distance between the lower shearing blade 4b and the thin plate 1 has no problem if it is about 5 mm or more.

That is, since the thin plate 1 is supported on both sides of the shear in the running direction by the table rollers 47, 48, it is rare that the thin plate 1 lowers, near the shearing blades, largely below the pass line of a line on which the thin plate 1 passes, and it is possible to prevent contact between the lower shearing blade and the thin plate 1 by keeping a little gap, and it is possible to prevent the thin plate 1 from being scratched by the contact.

Further, on the above, the thin plate 1 in Fig. 1 is not necessary a plate material, but wire material, tube material or bar material also can be treated in the same manner.

Further, in the present invention, a thin plate material is sufficient even in a cold rolling equipment other than the hot rolling equipment. That is, it is sufficient if it is long size material.

Next, usually, the size of the drum shaft in Fig. 1 is about 700 - 800 mm in diameter and the drum length is designed to be longer by about 300 mm than the maximum plate width.

In Figs. 1 to 3, an example in which the shafts, pins and the bearings portions supporting them are supported by surface bearings for simplification is shown, however, any kinds of bearings can be used, for example, it is advantageous to employ roll bearings with less gap instead of those bearings.

As for the fulcrum gears 11, 12 of the flying shear of one embodiment of the present invention, shown in Fig. 1, an example of gears different in number of teeth is shown, however, gears having the same number of teeth can be used, of course. Further, it is possible to use sector gears, or the like. Further, it is possible to directly mount the gears end portions of the upper and lower swing frames and mesh each other.

Further, in Fig. 1, the eccentric shaft 21 is provided at the upper connecting point of the rod 20, however, it is also sufficient to provide it at a position of the lower connecting pin 18, or to provide it at connecting points of the both sides, or to provide it at an intermediate portion of the rod 20.

However, in view of making play small, it is a matter of course that it is better to provide it only at the connection point of on one side of the swing frames.

According to the above-mentioned embodiments, the following effects can be attained.

1) As for the drum support bearings in the present embodiment, because of a swing type shearing mechanism, bearings of large diameter such as double bearing mechanisms as shown in JP A 5-123919 and as employ eccentric rings are unnecessary. That is, since small diameter bearings of one kind are sufficient, play in vertical and horizontal direction is small, the upper and lower shearing blades are meshed well when shearing, opening and closing of the upper and lower shearing blades are synchronized well, shearing of high performance is possible and shearing precision can be raised.

2) The opening and closing mechanism of the upper and lower drum shafts employs connection of one end sides of the upper and lower swing frames in the running direction of a thin plate by fulcrum pins and connection of the other end portions by the eccentric mechanism. Any connection is rigid connection mechanism, so that it is a high rigidity structure, and since the rigidity is not reduced as in hydraulic connection shown in JP A 4-223818, good shearing is possible without vibrations even at a high speed shearing and shearing precision at a high speed shearing can be improved.

3) The connection pins of the upper and lower swing frames are sufficient to be provided only on the two, left and right sides of the upper and lower swing frames in the running direction of thin plate, and a lot of connection pins are unnecessary to be provided at upper and lower, left and right portions as shown in JP A 5-131320, so that the number of parts can be reduced to be few number, play in the equipment, provided because of large number of parts can be reduced, good shearing is possible and the shearing precision can be improved.

4) Amounts of swing of the upper and lower swing frames are larger in ratio on the upper side than the lower swing frame side, a whole amount of opening by the eccentric mechanism can be restricted to a small amount.

5) Since the upper and lower drum shafts can be pulled out of the shear body, maintenance of the shearing blades can be easily carried out.

POSSIBILITY OF INDUSTRIAL USE

According to the flying shear and flying shear method of the present invention, such effects can be attained that the rigidity of the equipment performing opening and closing motions of the shearing blades is increased, play in the equipment is made small, opening and closing of the shearing blades are effected in a short time and the shearing precision can be improved.

**Claims**

1. A flying shear comprising

    upper and lower shearing blades shearing a running long material from up and down sides, a pair of, upper and lower, drum shafts mounting said upper and lower shearing blades at positions of the same phase, respectively, and upper and lower swing frames supporting said upper and lower drum shafts, wherein fulcrum gears are provided on one side of said upper and lower swing frames in the running direction of the long material, and a shearing blade opening and closing means is provided on the other side of said upper and lower swing frames in the running direction of the long material for swinging said upper and lower swing frames around said fulcrum gears as fulcrums in the up and down direction to open and close said shearing blades.

2. A flying shear in which a pair of, upper and lower, drum shafts having shearing blades mounted at positions of the same phase for shearing a running long material to prescribed length are driven to rotate in opposite directions to each other through a pinion stand and spindles, and synchronizing gears are provided for synchronizing respective speeds are provided on said pair of upper and lower drum shafts provided with said shearing blades, said upper and lower drum shafts, upper and lower shearing blades and synchronizing gears being opened when shearing is not effected, and closed to shear the long material by said upper and lower shearing blades when shearing is effected, wherein

    said upper and lower drum shafts are mounted on said respective swing frames through bearing boxes, fulcrum gears are mounted at fulcrums of rotation of said respective swing frames to mesh each other, said upper and lower swing frames are connected to each other through an eccentric mechanism on the other end sides of said swing frames, and

    a distance between connecting points of said upper and lower swing frames is made able to change expansible by said eccentric mechanism, whereby said upper and lower swing frames are opened and closed, and not-shearing and shearing operations of the running long material are effected.

3. A flying shear according to claim 1 or 2, wherein said fulcrum gears are formed so that a pitch diameter of the fulcrum gear provided on said upper swing frame is smaller than that of the fulcrum gear provided on said lower swing frame.

4. A flying shear according to claim 1, 2 or 3, wherein said upper and lower drum shafts are detachably mounted on said upper and lower swing frames through said bearing boxes, and a rail is provided between the inside and outside of said swing frames for carrying in and out said upper and lower drum shafts.

5. A flying shear, wherein upper and lower drum shafts for shearing are mounted on respective upper and lower swing frames through detachable bearing boxes, and exchange of shearing blades mounted on said respective drum shafts is effected by closing said upper and lower swing frames to a prescribed position, vertically overlaying said bearing boxes inserting and supporting said drum shafts, releasing said bearing boxes from said swing frames, and taking out from the inside of said swing frames to the outside by running on rail by an actuator.

6. A flying shear according to claim 1, 2, 3, 4 or 5, wherein an eccentric mechanism connecting the one end sides of said upper and lower swing frames has a rod interposed between said upper and lower swing frames to connect them, and is provided at any one of the connecting points of said upper and lower swing frames and said rod.

7. A flying shear method of moving up and down a pair of, upper and lower, swing frames supporting upper and lower drum shafts while rotating said upper and lower drum shafts mounting upper and lower shearing blades at positions of the same phase and shearing a running long material from an up and down direction, wherein said upper and lower shearing blades are opened and closed by moving an one end sides of said upper and lower swing frames in the up and down direction, with fulcrum gears provided as fulcrums on the other sides of said upper and lower swing frames in the running direction of the long material.

# FIG.1

FIG.2

EP 1 016 482 A1

# FIG.3

# FIG.5

## FIG.4

## FIG.6

EP 1 016 482 A1

# FIG.7

## FIG.8

## FIG.9

EP 1 016 482 A1

## INTERNATIONAL SEARCH REPORT

International application No.

PCT/JP97/00640

| A. CLASSIFICATION OF SUBJECT MATTER |
|---|
| Int. Cl$^6$  B23D25/06, B23D25/12 |

According to International Patent Classification (IPC) or to both national classification and IPC

| B. FIELDS SEARCHED |
|---|
| Minimum documentation searched (classification system followed by classification symbols) |
| Int. Cl$^6$  B23D25/06, B23D25/12 |

Documentation searched other than minimum documentation to the extent that such documents are included in the fields searched

| | |
|---|---|
| Jitsuyo Shinan Koho | 1920 - 1997 |
| Kokai Jitsuyo Shinan Koho | 1971 - 1997 |
| Toroku Jitsuyo Shinan Koho | 1994 - 1997 |

Electronic data base consulted during the international search (name of data base and, where practicable, search terms used)

| C. DOCUMENTS CONSIDERED TO BE RELEVANT | | | |
|---|---|---|---|
| Category* | Citation of document, with indication, where appropriate, of the relevant passages | | Relevant to claim No. |
| A | JP, 44-27429, B (United Engineering and Foundly Co.), November 13, 1969 (13. 11. 69), Fig. 2 (Family: none) | | 1 - 7 |
| A | JP, 50-12685, A (Schrömann·Siemag AG.), February 8, 1975 (08. 02. 75), Figs. 2a, b (Family: none) | | 1 - 7 |
| A | JP, 52-98286, A (Ishikawajima-Harima Heavy Industries Co., Ltd.), August 17, 1977 (17. 08. 77), Figs. 1, 2, 3 (Family: none) | | 2, 5 |
| A | JP, 54-19289, A (Ishikawajima-Harima Heavy Industries Co., Ltd.), February 13, 1979 (13. 02. 79), Fig. 2 (Family: none) | | 4, 5 |

| ☐ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| May 26, 1997 (26. 05. 97) | June 3, 1997 (03. 06. 97) |

| Name and mailing address of the ISA/ | Authorized officer |
|---|---|
| Japanese Patent Office | |
| Facsimile No. | Telephone No. |

Form PCT/ISA/210 (second sheet) (July 1992)

17